# EUROPEAN PATENT SPECIFICATION

(11) **EP 3 090 213 B1**
(45) Date of publication and mention of the grant of the patent: **01.02.2023**
(21) Application number: 14828326.0
(22) Date of filing: 12.12.2014
(51) Int. Cl.: F24H 1/52, F24H 9/00, F24H 1/41, F24D 11/02

(54) **HEAT EXCHANGER, HEATING DEVICE, HEATING SYSTEM AND METHOD FOR HEATING WATER**
WÄRMETAUSCHER, HEIZVORRICHTUNG, HEIZSYSTEM UND VERFAHREN ZUM ERHITZEN VON WASSER
ÉCHANGEUR DE CHALEUR, DISPOSITIF DE CHAUFFAGE, SYSTÈME DE CHAUFFAGE ET PROCÉDÉ POUR CHAUFFER DE L'EAU

(30) Priority: 13.12.2013 NL 2011960
(43) Date of publication of application: 09.11.2016
(73) Proprietor: Intergas Verwarming B.V., 7742 NA Coevorden (NL)
(72) Inventor: COOL, Peter Jan, NL-7241 GA Lochem (NL)
(74) Representative: Arnold & Siedsma
(86) International application number: PCT/NL2014/050854
(87) International publication number: WO 2015/088343

(56) References cited:
- EP-A1- 2 463 591
- EP-A2- 0 190 572
- EP-A2- 0 819 893
- WO-A1-2006/050944
- WO-A1-2010/002255
- JP-A- 2008 076 002

## Description

The invention relates to a heat exchanger and to a heating device provided with such a heat exchanger, a heating system, and to a method for application thereof.

Heat exchangers find application in many cooling and heating devices. Known heating devices are for instance a heating boiler for heating the central heating water (CH water) and a geyser or boiler for heating tap water. A geyser is a throughflow water heater which heats the water as the water flows therethrough, while a boiler is a hot water supply device which has a hot water storage.

Combi-boilers are also known which combine the above-mentioned heating boiler with a geyser or boiler. An advantage thereof is that both the water for the CH installation and the tap water are heated with a single heat source, such as a burner. Because only a single heat source is applied, space is on the one hand saved and it is on the other hand advantageous from a cost viewpoint to dispense with a second heat source.

A particularly advantageous heat exchanger and hot water heating device provided therewith is proposed by applicant in their Netherlands patent NL1035654C (WO2010002255 A1). This heat exchanger is manufactured from a heat-conducting material and comprises transverse fins and longitudinal fins for guiding a fluid and for transferring heat between the fluid and the heat exchanger, a first conduit for guiding a second fluid, a second conduit for guiding a third fluid, wherein the first and second conduits are recessed into the heat-conducting material of the heat exchanger. Because this heat exchanger combines fins and two conduits, a heat exchange can take place between three fluids. The heat exchanger of NL1035654 is hereby particularly suitable for application in a combi-boiler, wherein the fluids flowing through the two conduits are CH water and tap water.

There is however a continuing need to further improve the efficiency of heating devices and heat exchangers, wherein preconditions such as compactness and reliability are respected.

The invention now has for its object to provide a heat exchanger and a heating device of the above described type, wherein said drawbacks do not occur, or at least do so to lesser extent.

Said object is achieved according to the invention with the heat exchanger, heating device, heating system and method according to the independent claims.

The heat exchanger for a heating device, in particular for a hot water appliance, comprises according to the invention the features of claim 1.

A 'limited part of the plane defined by the first conduit circuit' is understood to mean that the second conduit circuit extends less far into the heat-conducting material of the heat exchanger.

If the first conduit circuit extends a height H1 into the heat-conducting material and the second conduit circuit has a height H2, then H2 < H1.

Preferably further applying is the relation H2 < 0.8 x H1, and still more preferably H2 < 0.7 x H1. Compliance with this relation guarantees that the second conduit circuit, when arranged in a heating device, lies sufficiently far away from a burner functioning as heat source.

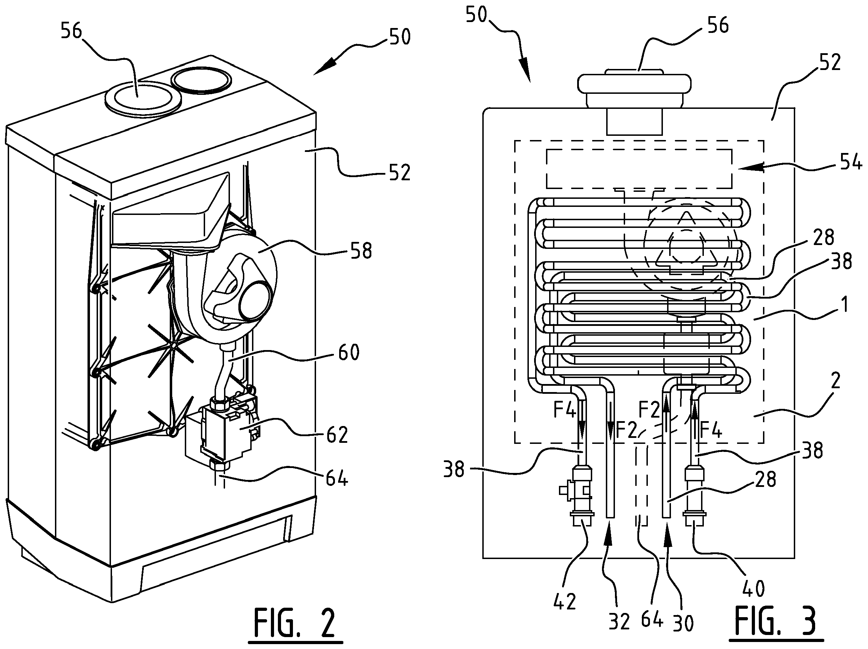

The preamble of claim 1 is known from combi-boilers supplied by applicant such as known from, among others, NL1035654. Because it is desired in the case of heat exchangers to achieve the most optimal possible heat transfer, in the heat exchanger shown in NL1035654 the conduit circuits between which heat transfer has to take place are placed close together over substantially the whole length of the heat exchanger - see in particular figure 2 of NL1035654. The heat exchanger according to the invention is distinguished from the heat exchanger of NL1035654 precisely in that - counter-intuitively - two conduit circuits arranged adjacently of each other in heat-exchanging contact have significantly different lengths.

This unusual structural solution provides the option of utilizing two separate heat sources, wherein an undesired heating of the one heat source with the other heat source is prevented or significantly reduced. It is hereby possible to apply two heat sources with different capacities, without the strongest heat source heating the weaker heat source and thermal energy thereby being lost.

The invention particularly provides a heat exchanger which integrates a gas-liquid heat exchanger and a liquid-liquid heat exchanger. Exceptional here is that the secondary liquid of both types of heat exchanger is the same, i.e. tap water and/or CH water. Both types of heat exchanger can be used, wherein the construction is such that the heat exchangers have a minimal adverse effect on each other when one of the two is for instance not in use. It can thus be envisaged that it is possible in autumn and spring under most conditions of use to suffice with heat supplied via a heat pump, whereby the gas burner need then be employed minimally for further additional heating.

In winter the gas burner can be supported by a natural heat source such as a heat pump or solar collector. Because it is however also possible to envisage that an air heat pump or solar collector will make a minimal contribution during some periods, it may occur that the fluid in the second and/or fourth conduit circuit is at a temporary standstill. In order to prevent the fluid boiling or chemically disintegrating, the second and/or fourth conduit circuit extend for only a limited part in the plane defined by the first conduit circuit and are arranged at least not directly behind the burner.

The heat-conducting material of the heat exchanger can be manufactured from a single piece, if desired with the fins at least partially integrated thereon.

According to a preferred embodiment, the second conduit circuit is at least 20% shorter than the first conduit circuit. The length of a conduit circuit is defined in this application as the total pipe length present inside the heat exchanger, so from the inlet opening of a conduit circuit to the outlet opening thereof in the heat-conducting material of the heat exchanger.

According to a further preferred embodiment of the heat exchanger, the first conduit circuit is arranged between the second conduit circuit and the first side of the heat-conducting material, wherein this first side is provided with the fins.

In this advantageous arrangement the third fluid flowing along the fins on the first side of the heat-conducting material as well as the second fluid flowing through the second conduit circuit can be utilized as heat source for heating the first fluid flowing through the first conduit circuit during use.

It is particularly advantageous here for the second conduit circuit, which is arranged on the side of the first conduit circuit remote from the first side of the heat-conducting material, to be shielded to some extent here by the first conduit circuit from the heat generated by the third fluid.

In an embodiment in which the third fluid is combustion gases and the second conduit circuit is connected to a natural heat source such as a heat pump or a solar collector, it is hereby possible to prevent thermal energy extracted from the third fluid being discharged. The proposed arrangement of conduit circuits thus increases the energy efficiency of the heat exchanger.

According to the invention, the heat exchanger further comprises a third conduit circuit for guiding a fourth fluid which is also arranged in the heat-conducting material of the heat exchanger.

Due to the addition of a third conduit circuit heat exchange can take place between four fluids. A conventional combi-boiler is already suitable for heating both CH water and tap water, and it is unlikely that a further type of hot water consumer will need to be operated. The reason that the heat exchanger according to the invention is nevertheless provided with a third conduit circuit for guiding a fourth fluid has the particular purpose of providing the option of enabling connection of a second heat source, such as a heat pump or a solar collector, to the heat exchanger.

It is otherwise noted that the invention can if desired be provided with further conduit circuits configured for connection of a further heat source thereto. The device according to a further preferred embodiment thus comprises a fourth conduit circuit for guiding a fifth fluid which is also arranged in the heat-conducting material of the heat exchanger. Because the device is now provided with a fourth conduit circuit, two additional heat sources, for instance the above discussed heat pump and solar collector, can be connected simultaneously.

According to the invention, the third conduit circuit is arranged between the first side of the heat-conducting material, which side is provided with the fins, and the second conduit circuit and/or the fourth conduit circuit. The third conduit circuit, which is intended for the purpose of connection to a water consumer of a hot water device, has the advantage just as the first conduit circuit that it can be heated individually, or if desired together, via two or even three different heat sources.

According to a further preferred embodiment, the first conduit circuit and the third conduit circuit are arranged substantially in the same plane and define an interwoven pattern.

With this arrangement both the first conduit circuit and the third conduit circuit, which are both intended for connection to a hot water consumer in a hot water device, are in optimal heat-exchanging contact with the heat sources of this same hot water device: respectively the third fluid flowing along the fins and the second fluid flowing through the second conduit circuit. In addition, the first conduit circuit and the third conduit circuit together shield the second and/or fourth conduit circuit, which can for instance be intended for a heat pump, from the fins. The energy efficiency is further improved with this configuration: on the one hand owing to this shielding, and on the other hand there is a better heat transfer from respectively the second and third fluid to the first and fourth fluid.

Two hot water consumers can benefit from a similar heat transfer when, according to a further preferred embodiment, inside the heat-conducting material the length of the third conduit circuit is substantially the same as the length of the first conduit circuit.

It is however also possible to envisage a difference in capacity of the hot water consumers being desired. It is thus a trend for instance that, as a result of better insulation of buildings, the capacity required by a CH water consumer decreases, while conversely the use of hot tap water increases. This is because, for comfort and other reasons, increasingly larger showers and the associated higher water pressure are desired. In order to accommodate this difference in desired hot water capacity, according to an alternative preferred embodiment the length of the third conduit circuit is greater than the length of the second conduit circuit and/or the length of the fourth conduit circuit inside the heat-conducting material, and the length of the second and/or the fourth conduit circuit differs by at least 10% from the length of the first conduit circuit.

It is noted that the longest conduit circuit is connected to the water consumer for which the greatest capacity is desired. If as in the case of the above-mentioned trend there is a greater need for hot tap water than for hot CH water, the longest conduit circuit is connected to the tap water circuit.

The invention further relates to a heating device, comprising:
- a housing with a heat exchanger as described in the foregoing;
- a first heat source arranged in the housing and comprising at least one burner, wherein the burner is arranged close to the first side of the heat-conducting material provided with the fins and wherein the combustion gases of the at least one burner form the third fluid, which flows during use from the burner side via the fins and along the first side of the heat-conducting material to a discharge side of the housing, and heat transfer can take place here between the third fluid and the heat-conducting material;
- wherein the first conduit circuit arranged in the heat-conducting material for guiding the first fluid is provided with a first inlet opening and a first outlet opening; and
- wherein the second conduit circuit arranged in the heat-conducting material for guiding the second fluid is provided with a second inlet opening and a second outlet opening.

The fins extend from a first side, which is arranged close to one or more burners in a situation in which the heat exchanger is mounted in a hot water appliance, in longitudinal direction along the first side of the heat-conducting material and in the direction of a combustion gas discharge side of the hot water appliance.

According to a preferred embodiment of the heating device, the second inlet opening and the second outlet opening of the second conduit circuit are arranged close to the discharge side of the housing lying opposite the burner side, and wherein the second conduit circuit extends therefrom to a distance from the one or more burners such that the second medium flowing through the second conduit circuit remains substantially unaffected by the heat generated by the one or more burners.

This construction achieves that the second conduit circuit extends only in the relatively cold part of the heat exchanger. This prevents the one or more gas burners heating the second conduit circuit, which may for instance be intended for coupling to a heat pump, and the second fluid present therein during use.

According to a further preferred embodiment, the heating device further comprises a fourth conduit circuit arranged in the heat-conducting material for guiding a fifth fluid, which is provided with a fourth inlet opening and a fourth outlet opening. Two additional heat sources, such as a heat pump and a solar collector, can thus be connected to the heating device in addition to the gas burner.

According to yet another preferred embodiment of the heating device, the fourth inlet opening and the fourth outlet opening of the fourth conduit circuit are arranged close to the discharge side of the housing lying opposite the burner side, and the fourth conduit circuit extends therefrom to a distance from the one or more burners such that the fifth medium flowing through the fourth conduit circuit remains substantially unaffected by the heat generated by the one or more burners.

The invention further relates to a heating system, comprising:
- a heating device as described above;
- wherein the first conduit circuit is connected via the first inlet opening and first outlet opening to a hot water consumer; and
- wherein the second conduit circuit is connected via the second inlet opening and second outlet opening to a heat source.

According to a preferred embodiment of the heating system, the hot water consumer connected to the first conduit circuit is a CH water consumer or a tap water consumer.

According to a further preferred embodiment, the heat source connected to the second conduit circuit comprises a solar collector or a heat pump, in particular an air heat pump or a ground heat pump.

By providing the heating device with a second heat source in the form of a heat pump a natural and inexhaustible energy source can be utilized to heat or preheat CH water and/or tap water. A further energy-saving is realized in environmentally friendly manner by utilizing heat in the ambient air or ground heat. The heat generated with a heat pump moreover has no CO2 emission.

According to yet another preferred embodiment, the heat exchanger further comprises a third conduit circuit for guiding a fourth fluid which is also arranged in the heat-conducting material of the heat exchanger, wherein the third conduit circuit is provided with a third inlet opening and a third outlet opening with which it is connected to a hot water consumer.

Because according to these measures the heating system is connectable simultaneously to two hot water consumers, so both a CH water consumer and a tap water consumer, a second heat source can thus be added to a conventional combi-boiler. The heating device can hereby utilize as required one heat source chosen from the available heat sources or, if desired, even both at the same time for the heat exchange between the different fluids.

According to yet another preferred embodiment, the hot water consumers connected to the first conduit circuit and the second conduit circuit comprise a CH water consumer and a tap water consumer.

The CH water consumer can be connected to the first conduit circuit and the tap water consumer to the second conduit circuit, or vice versa. If the two circuits have a differing length and/or flow rate, the water consumer for which the greatest capacity is desired is connected to the circuit with the greatest length and/or the highest flow rate.

According to a further preferred embodiment of the heating system, the heat exchanger further comprises a fourth conduit circuit for guiding a fifth fluid which is also arranged in the heat-conducting material of the heat exchanger;
- wherein the fourth conduit circuit is provided with a fourth inlet opening and a fourth outlet opening with which it is connected to a heat source.

According to yet another preferred embodiment of the heating system, the heat source connected to the fourth conduit circuit comprises a heat pump or a solar collector.

Finally, the invention relates to a method for heating water of a water consumer using a heating system described in the foregoing, comprising the steps of:
- pumping a second fluid heated by a heat source through the second conduit circuit arranged in the piece of heat-conducting material; and
- transferring heat via the heat-conducting material from the second fluid to a first conduit circuit which is arranged close to the second conduit circuit and in heat-exchanging contact therewith and which is connected to a hot water consumer.

A natural and inexhaustible energy source is utilized by providing the heating device with a second heat source in the form of a heat pump or a solar collector.

According to a preferred embodiment thereof, the method further comprises the step of transferring heat via the heat-conducting material to a third conduit circuit which is likewise arranged in the heat-conducting material close to the second conduit circuit and to which a further hot water consumer is connected.

According to a further preferred embodiment thereof, the method further comprises the step of heating the heat-conducting material with at least one burner in order to heat the first fluid flowing through the first conduit circuit and/or the fourth fluid flowing through the third conduit circuit.

As first step the water to be heated can be preheated using a heat pump, after which it flows past a burner which heats the water further to the desired water temperature. The burner can for this purpose switch on for several seconds in pulse-wise manner so as to impart an extra heat boost to water already preheated by the heat pump.

Preferred embodiments of the present invention are further elucidated in the following description with reference to the drawing, in which:
Figure 1 is a schematic view provided with a heating system according to an embodiment of the invention;
Figure 2 is a cut-away perspective view of a heating device not in accordance with the invention
Figure 3 is a schematic view of the heating device shown in figure 2;
Figure 4 is a cross-sectional view of the heating device shown in figures 2 and 3;
Figure 5 is a cut-away perspective view of a heating device according to a second embodiment of the invention;
Figures 6 and 7 are side views of the heating device shown in figure 5;
Figures 8 and 9 are perspective views of the conduit circuits of the embodiment shown in figure 5; and
Figure 10 is a side view of a further preferred embodiment with a fourth conduit circuit.

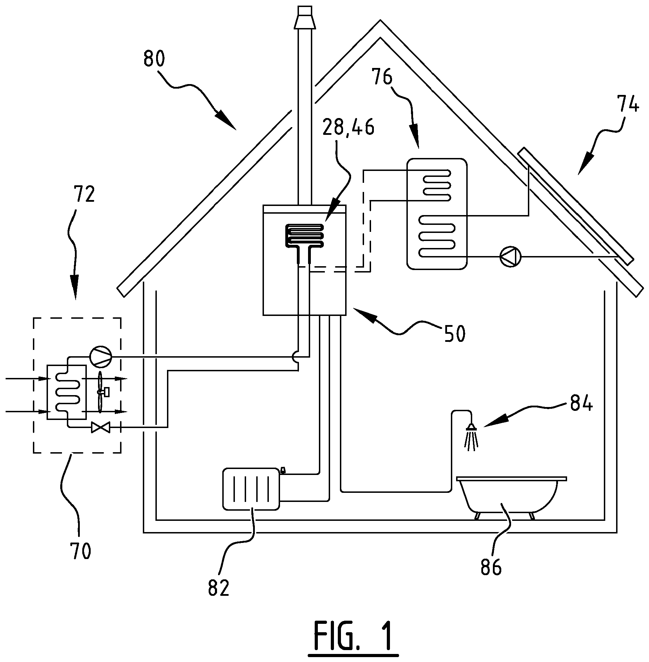

A heating system 70 according to an embodiment of the invention is arranged in the building 80 shown in figure 1. Heating system 70 is connected to a heat pump 72 and a solar collector 74, which function as environmentally friendly heat sources for heating water which can then be used by hot water consumers, such as the CH system with heating radiator 82, and shower 84 and bath 86. Solar collector 74 is preferably provided with a buffer vessel 76.

It is noted that heat pump 72 and solar collector 74 can be applied separately of each other or in combination as heat source.

The basis of heating system 70 is formed by a heating device 50 which comprises a heat exchanger 1 received in a housing 52. Heat exchanger 1 can be heated with one or more gas burners 54. A fan 58 draws in via a gas mixing pipe 60 a gas mixture prepared by a gas block 62. Gas block 62 obtains gas via gas feed pipe 64. An air feed 56 is provided on the upper side of housing 52 (figure 2).

The heat-conducting material 2 of heat exchanger 1 is shown transparently in the figure, whereby the conduit circuits 28 and 38 arranged therein are visible.

In the device not in accordance with the invention shown in figure 3 there is only one conduit circuit which is connected to a hot water consumer: the third conduit circuit 38 in the shown embodiment is intended for hot tap water and comprises a third inlet opening 40, through which relatively cool tap water enters heat exchanger 1, and a third outlet opening 42 through which the tap water heated in heat exchanger 1 exits heat exchanger 1.

It is noted that figure 3 shows a hot water appliance which supplies only hot tap water, but that a hot water device 50 which supplies only hot CH water can be assembled in similar manner. In this description the third conduit circuit 38 is a circuit for tap water and the first conduit circuit 18 is a circuit for CH water. It is expressly noted that the skilled person will appreciate that within the inventive concept these types of hot water can be switched whereby third conduit circuit 38 and first conduit circuit 18 are wholly interchangeable.

Also shown in figure 3 is a second conduit circuit 28 through which flows hot water supplied by a heat pump 72. This hot water enters heat exchanger 1 via second inlet opening 30. Once inside heat exchanger 1, this hot water relinquishes heat via second conduit circuit 28 to heat-conducting material 2, which conducts the heat to a conduit circuit of a hot water consumer 82, 84, 86. In the shown embodiment the heat coming from the second fluid F2 flowing through second conduit circuit 28 is transferred to the fourth fluid, i.e. the tap water, flowing through third conduit circuit 38.

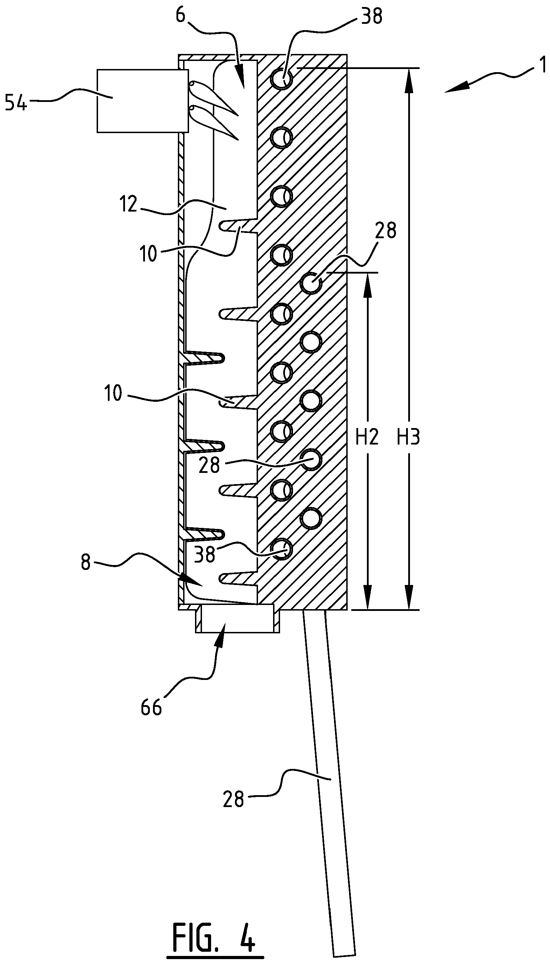

The side view of figure 4 shows in cross-section how third conduit circuit 38, through which the water of the water consumer - in this case the tap water - flows, is arranged between second conduit circuit 28 and the first side 4 of the heat-conducting material 2 of heat exchanger 1.

The first side 4 of heat exchanger 1 heated by the third fluid F3 coming from gas burners 54 and the second conduit circuit 28 are both arranged close to third conduit circuit 38 due to this intermediate placing of third conduit circuit 38. They can thus both function, individually or together, as heat source for heating the fourth fluid F4 flowing through this third conduit circuit 38.

The intermediate placing of third conduit circuit 38 has the further advantage that second conduit circuit 28 is shielded by third conduit circuit 38 from the first side 4 of heat exchanger 1 heated by third fluid F3.

First side 4 of heat exchanger 1 is provided with transverse fins 10 and longitudinal fins 12 which guide the hot combustion gases coming from burners 54 and forming third fluid F3 along this first side 4 such that an optimal heat transfer from third fluid F3 to heat-conducting material 2 of heat exchanger 1 is obtained. Combustion gases F3 flow here from a burner side 6 of first side 4 to a discharge side 8 of first side 4. A combustion gas outlet opening 66 is provided close to this discharge side 8.

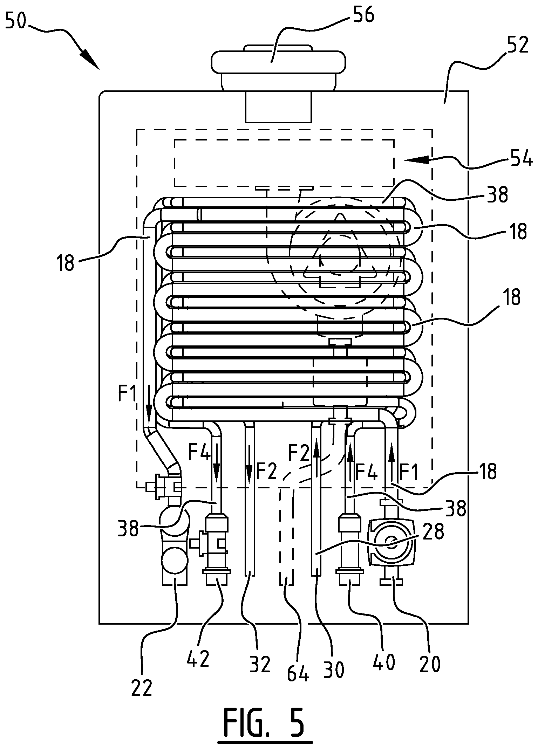

A particularly advantageous embodiment is shown in figure 5, where two conduit circuits 18, 38 connected to water consumers are provided. The operation of the embodiment shown in figures 5-9 is similar to that of the already described device, but is further expanded. A combi-boiler is hereby obtained which can have the advantages of being augmented with an additional heat source, preferably in the form of an environmentally friendly heat pump.

In addition to the already described third conduit circuit 38 for tap water, a first conduit circuit 18 is now also provided through which a first fluid F1 flows. This first fluid F1 is CH water which flows via a first inlet opening 20 into and - after having been heated - exits heat exchanger 1 via a first outlet opening 22.

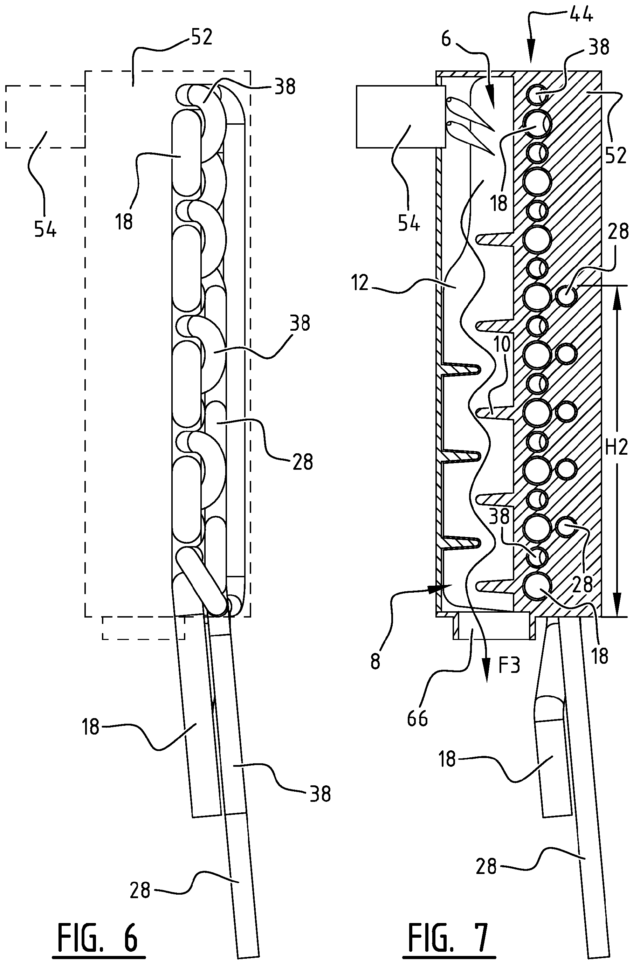

Figures 6 and 7 show how the two conduct circuits 18, 38 connected to water consumers are both arranged substantially in the same plane 44. On the one hand they are hereby both in good heat-exchanging contact with the two heat sources: the first side 4 of heat exchanger 1 heated by the hot third fluid F3, and the second conduit circuit 28. On the other hand they also shield second conduit circuit 28 from undesired heating.

For both shown embodiments it is the case that conduit circuits 18, 28, 38 are arranged as close together as possible and that second conduit circuit 28 is considerably shorter than conduit circuits 18, 38 which are in contact with hot water consumers.

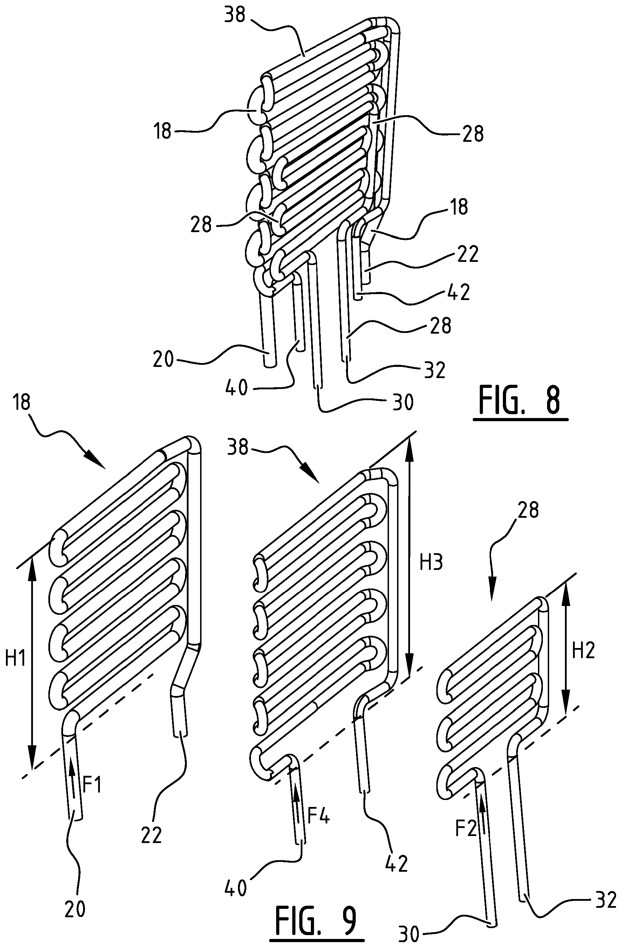

Because second conduit circuit 28 is considerably shorter than conduit circuits 18, 38 (figures 8 and 9) and extends substantially only along a limited part of the plane defined by first conduit circuit 18 and/or third conduit circuit 38 (figures 4, 7 and 8), an undesired heating of the one heat source by the other heat source is prevented or significantly reduced. It is hereby possible to apply two heat sources with different capacities without the stronger heat source heating the weaker heat source and thermal energy thereby being lost. Also prevented is that the fluid F2, F5 associated with a weaker heat source - which may be temporarily switched off - begins to boil or is heated such that a chemical disintegration takes place.

Figures 4, 7 and 9 show how far the different conduit circuits 18, 28, 38 extend into heat-conducting material 2 of heat exchanger 1. First conduit circuit 18 thus extends over a height H1, and second conduit circuit 28 and third conduit circuit 38 extend over a height of respectively H2 and H3. It can clearly be seen that height H2 is smaller than height H1, i.e. H2 < H1. It is also the case that H2 < H3.

Preferably further applying is the relation H2 < 0.8 × H1, and still more preferably H2 < 0.7 x H1. Compliance with this relation guarantees that second conduit circuit 28, when arranged in a heating device 50, lies sufficiently far away from a burner 54 functioning as heat source.

As shown in figures 4, 7 and 10, heat exchanger 1 is provided with transverse fins 10 and longitudinal fins 12. Longitudinal fins 12 have a variation in height: at the position of burner 54 they have a relatively limited height, and this height of longitudinal fins 12 increases the further longitudinal fins 12 are removed from burner 54. The fin height of longitudinal fins 12 is designed such that the maximum allowable operating temperature is reached in substantially the whole upper part of heat exchanger 1. Measured at the position of plane 44 of first conduit circuit 18 and third conduit circuit 38, this is typically about 120°C.

It is noted that the height H2 to which second conduit circuit 28 extends into heat-conducting material 2 of heat exchanger 1 extends in a further preferred embodiment substantially within the range in which longitudinal fins 12 of heat exchanger 1 have their maximum height.

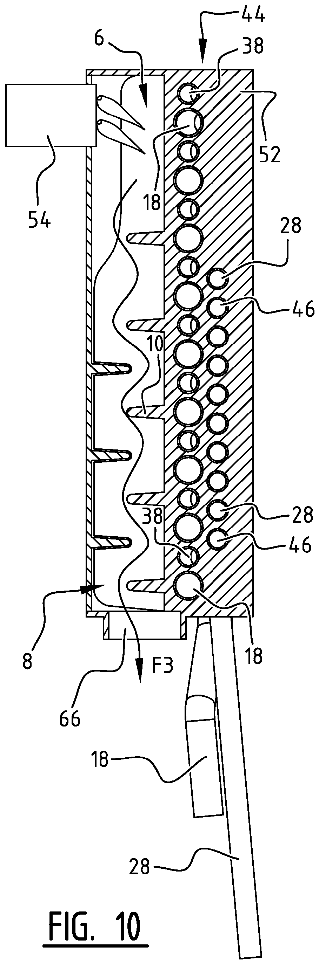

The side view shown in figure 10 shows a cross-section greatly resembling that of figure 7, with the understanding that a fourth conduit circuit 46 for guiding a fifth fluid F5 is also arranged in heat-conducting material 2 of heat exchanger 1. Because heat exchanger 1 of figure 10 comprises both a second conduit circuit 28 and a fourth conduit circuit 46, it is possible in heat exchanger 1 to connect to two different heat sources: for instance a heat pump 72 and a solar collector 74, or two heat pumps of different types, such as an air heat pump and a ground heat pump. The height to which the fourth conduit circuit extends into heat-conducting material 2 of heat exchanger 2 substantially corresponds to the height H2 of second conduit circuit 28.

Although they show preferred embodiments of the invention, the above described embodiments are intended only to illustrate embodiments of the present invention and not in any way to limit the specification of the invention. When measures in the claims are followed by reference numerals, such reference numerals serve only to contribute toward understanding of the claims, but are in no way limitative of the scope of protection. It is particularly noted that the skilled person can combine technical measures of the different embodiments. The invention is defined by the following claims, within the scope of which many modifications can be envisaged.

## Claims

1. Heat exchanger (1) for a heating device (50), in particular for a hot water appliance, comprising:
- a first conduit circuit (18) for guiding a first fluid (F1);
- a second conduit circuit (28) for guiding a second fluid (F2);
- wherein the first conduit circuit (18) and the second conduit circuit (28) are both arranged in a heat-conducting material (2);
- wherein the heat-conducting material (2) is provided on a first side with fins (10, 12) for transferring heat between a third fluid (F3) and at least the first conduit circuit (18);
- wherein the first conduit circuit (18) substantially defines a plane arranged substantially parallel to and close to the first side of the heat-conducting material (2);
- wherein the second conduit circuit (28) is arranged substantially along the first conduit circuit (18); and
- wherein the second conduit circuit (28) extends substantially along only a limited part of the plane defined by the first conduit circuit (18);
**characterized by** a third conduit circuit (38) for guiding a fourth fluid (F4) which is also arranged in the heat-conducting material (2) of the heat exchanger (1); and
- wherein the third conduit circuit (38) is arranged between the first side of the heat-conducting material (2), which side is provided with the fins (10, 12), and the second conduit circuit (28).

2. Heat exchanger as claimed in claim 1, wherein the second conduit circuit (28) is at least 20% shorter than the first conduit circuit (18).

3. Heat exchanger as claimed in claim 1 or 2, further comprising a fourth conduit circuit (46) for guiding a fifth fluid (F5) which is also arranged in the heat-conducting material (2) of the heat exchanger (1); and
- wherein the third conduit circuit (38) is arranged between the first side of the heat-conducting material (2), which side is provided with the fins (10, 12), and the fourth conduit circuit (46).

4. Heat exchanger as claimed in any of the foregoing claims, wherein the first conduit circuit (18) and the third conduit circuit (38) are arranged substantially in the same plane and define an interwoven pattern.

5. Heat exchanger as claimed in any of the foregoing claims, wherein the first conduit circuit (18) is arranged between the second conduit circuit (28) and the first side of the heat-conducting material (2), wherein this first side is provided with the fins (10, 12), and wherein inside the heat-conducting material (2) the length of the third conduit circuit (38) is substantially the same as the length of the first conduit circuit (18).

6. Heat exchanger according to claim 5, wherein inside the heat-conducting material (2) the length of the third conduit circuit (38) is greater than the length of the second conduit circuit (28) and/or the length of the fourth conduit circuit (46), and wherein this length of the second (28) and/or the fourth conduit circuit (46) differs by at least 10% from the length of the first conduit circuit (18).

7. Heating device (50), comprising:
- a housing (52) with a heat exchanger (1) as claimed in any of the foregoing claims;
- a first heat source arranged in the housing (52) and comprising at least one burner (54), wherein the burner (54) is arranged close to the first side of the heat-conducting material (2) provided with the fins (10, 12) and wherein the combustion gases of the at least one burner (54) form the third fluid (F3), which flows during use from the burner side via the fins (10, 12) and along the first side of the heat-conducting material (2) to a discharge side of the housing (52), and heat transfer can take place here between the third fluid (F3) and the heat-conducting material (2);
- wherein the first conduit circuit (18) arranged in the heat-conducting material (2) for guiding the first fluid (F1) is provided with a first inlet opening and a first outlet opening; and
- wherein the second conduit circuit (28) arranged in the heat-conducting material (2) for guiding the second fluid (F2) is provided with a second inlet opening and a second outlet opening.

8. Heating device as claimed in claim 7,
- wherein the second inlet opening and the second outlet opening of the second conduit circuit (28) are arranged close to the discharge side of the housing (52) lying opposite the burner side, and wherein the second conduit circuit (28) extends therefrom to a distance from the one or more burners (54) such that the second medium (F2) flowing through the second conduit circuit (28) remains substantially unaffected by the heat generated by the one or more burners (54); and
- preferably further comprising a fourth conduit circuit (46) arranged in the heat-conducting material (2) for guiding a fifth fluid (F5) which is provided with a fourth inlet opening and a fourth outlet opening; and
- wherein more preferably the fourth inlet opening and the fourth outlet opening of the fourth conduit circuit (46) are arranged close to the discharge side of the housing (52) lying opposite the burner side, and wherein the fourth conduit circuit (46) extends therefrom to a distance from the one or more burners (54) such that the fifth medium (F5) flowing through the fourth conduit circuit (46) remains substantially unaffected by the heat generated by the one or more burners (54).

9. Heating system (70), comprising:
- a heating device (50) as claimed in claim 7 or 8;
- wherein the first conduit circuit (18) is connected via the first inlet opening and first outlet opening to a hot water consumer;
- wherein the second conduit circuit (28) is connected via the second inlet opening and second outlet opening to a heat source;
**characterized in that** the heat source connected to the second conduit circuit (28) comprises a heat pump (72), in particular an air heat pump or a ground heat pump, or a solar collector (74).

10. Heating system as claimed in claim 9, wherein the hot water consumer connected to the first conduit circuit is a CH water consumer or a tap water consumer.

11. Heating system as claimed in any of the claims 9 or 10, wherein the heat exchanger (1) further comprises a third conduit circuit (38) for guiding a fourth fluid (F4) which is also arranged in the heat-conducting material (2) of the heat exchanger (1);
- wherein the third conduit circuit (38) is provided with a third inlet opening and a third outlet opening with which it is connected to a hot water consumer; and
- wherein the hot water consumers connected to the first conduit circuit (18) and the second conduit circuit (28) preferably comprise a CH water consumer and a tap water consumer.

12. Heating system according to claim 11, wherein the heat exchanger (1) further comprises a fourth conduit circuit (46) for guiding a fifth fluid (F5) which is also arranged in the heat-conducting material (2) of the heat exchanger (1); and
- wherein the fourth conduit circuit (46) is provided with a fourth inlet opening and a fourth outlet opening with which it is connected to a heat source.

13. Heating system as claimed in claim 12, wherein the heat source connected to the fourth conduit circuit (46) comprises a heat pump (72) or a solar collector (74).

14. Method for heating water of a water consumer using a heating system (70) as claimed in any of the claims 9-13, comprising the steps of:
- pumping a second fluid (F2) heated by a heat source through the second conduit circuit (28) arranged in the piece of heat-conducting material (2); and
- transferring heat via the heat-conducting material (2) from the second fluid (F2) to a first conduit circuit (18) which is arranged close to the second conduit circuit (28) and in heat-exchanging contact therewith and which is connected to a hot water consumer;
**characterized by** the step of transferring heat via the heat-conducting material (2) to a third conduit circuit (38) which is likewise arranged in the heat-conducting material (2) close to the second conduit circuit (28) and to which a further hot water consumer is connected.

15. Method according to claim 14, further comprising the step of heating the heat-conducting material (2) with at least one burner (54) in order to heat the first fluid (F1) flowing through the first conduit circuit (18) and/or the fourth fluid (F4) flowing through the third conduit circuit (38).

## Patentansprüche

1. Wärmetauscher (1) für eine Heizvorrichtung (50), insbesondere für die Warmwasser-Erzeugung, aufweisend:
- einen ersten Leitungskreis (18) zur Führung eines ersten Fluids (F1);
- einen zweiten Leitungskreis (28) zur Führung eines zweiten Fluids (F2);
- wobei der erste Leitungskreis (18) und der zweite Leitungskreis (28) beide in einem wärmeleitenden Material (2) angeordnet sind;
- wobei das wärmeleitende Material (2) auf einer ersten Seite mit Rippen (10, 12) versehen ist, um Wärmeübertragung zwischen einem dritten Fluid (F3) und zumindest dem ersten Leitungskreis (18) zu ermöglichen;
- wobei der erste Leitungskreis (18) im Wesentlichen eine Ebene definiert, die im Wesentlichen parallel zu und nahe der ersten Seite des wärmeleitenden Materials (2) angeordnet ist;
- wobei der zweite Leitungskreis (28) im Wesentlichen entlang des ersten Leitungskreises (18) angeordnet ist; und
- wobei sich der zweite Leitungskreis (28) im Wesentlichen nur entlang eines begrenzten Teils der durch den ersten Leitungskreis (18) definierten Ebene erstreckt;
**gekennzeichnet durch** einen dritten Leitungskreis (38) zur Führung eines vierten Fluids (F4), welches ebenfalls in dem wärmeleitenden Material (2) des Wärmetauschers (1) angeordnet ist; und
- wobei der dritte Leitungskreis (38) zwischen der mit den Rippen (10, 12) versehenen ersten Seite des wärmeleitenden Materials (2) und dem zweiten Leitungskreis (28) angeordnet ist.

2. Wärmetauscher nach Anspruch 1, wobei der zweite Leitungskreis (28) mindestens 20% kürzer ist als der erste Leitungskreis (18).

3. Wärmetauscher nach Anspruch 1 oder 2, ferner aufweisend einen vierten Leitungskreis (46) zur Führung eines fünften Fluids (F5), das ebenfalls in dem wärmeleitenden Material (2) des Wärmetauschers (1) angeordnet ist; und
- wobei der dritte Leitungskreis (38) zwischen der mit den Rippen (10, 12) versehenen ersten Seite des wärmeleitenden Materials (2) und dem vierten Leitungskreis (46) angeordnet ist.

4. Wärmetauscher nach einem der vorherigen Ansprüche, wobei der erste Leitungskreis (18) und der dritte Leitungskreis (38) im Wesentlichen in derselben Ebene angeordnet sind und ein Webmuster bilden.

5. Wärmetauscher nach einem der vorherigen Ansprüche, wobei der erste Leitungskreis (18) zwischen dem zweiten Leitungskreis (28) und der ersten Seite des wärmeleitenden Materials (2) angeordnet ist, wobei diese erste Seite mit den Rippen (10, 12) versehen ist, und wobei innerhalb des wärmeleitenden Materials (2) der dritte Leitungskreis (38) im Wesentlichen die gleiche Länge aufweist wie die Länge des ersten Leitungskreises (18).

6. Wärmetauscher nach Anspruch 5, wobei innerhalb des wärmeleitenden Materials (2) die Länge des dritten Leitungskreises (38) größer ist als die Länge des zweiten Leitungskreises (28) und/oder als die Länge des vierten Leitungskreises (46), und wobei diese Länge des zweiten (28) und/oder des vierten Leitungskreises (46) um mindestens 10 % von der Länge des ersten Leitungskreises (18) abweicht.

7. Heizvorrichtung (50), aufweisend:
- ein Gehäuse (52) mit einem Wärmetauscher (1) nach einem der vorherigen Ansprüche;
- eine im Gehäuse (52) angeordnete erste Wärmequelle mit zumindest einem Brenner (54), wobei der Brenner (54) nahe der ersten Seite des mit den Rippen (10, 12) versehenen wärmeleitenden Materials (2) angeordnet ist und wobei die Verbrennungsgase des zumindest einen Brenners (54) das dritte Fluid (F3) bilden, welches im Betrieb von der Brennerseite über die Rippen (10, 12) und entlang der ersten Seite des wärmeleitenden Materials (2) zu einer Austrittsseite des Gehäuses (52) strömt, so dass dort eine Wärmeübertragung zwischen dem dritten Fluid (F3) und dem wärmeleitenden Material (2) erfolgen kann;
- wobei der in dem wärmeleitenden Material (2) angeordnete erste Leitungskreis (18) zur Führung des ersten Fluids (F1) mit einer ersten Einlassöffnung und einer ersten Auslassöffnung versehen ist; und
- wobei der in dem wärmeleitenden Material (2) angeordnete zweite Leitungskreis (28) zur Führung des zweiten Fluids (F2) mit einer zweiten Einlassöffnung und einer zweiten Auslassöffnung versehen ist.

8. Heizvorrichtung nach Anspruch 7,
- wobei die zweite Einlassöffnung und die zweite Auslassöffnung des zweiten Leitungskreises (28) nahe der der Brennerseite gegenüberliegenden Auslassseite des Gehäuses (52) angeordnet sind, und wobei sich der zweite Leitungskreis (28) von dort aus in einem solchen Abstand von dem einen oder den mehreren Brennern (54) erstreckt, dass das durch den zweiten Leitungskreis (28) strömende zweite Fluid (F2) von der von dem einen oder den mehreren Brennern (54) erzeugten Wärme im Wesentlichen unbeeinflusst bleibt; und
- vorzugsweise mit einem im wärmeleitenden Material (2) angeordneten vierten Leitungskreis (46) zur Führung eines fünften Fluids (F5), der mit einer vierten Einlassöffnung und einer vierten Auslassöffnung versehen ist; und
- wobei vorzugsweise die vierte Einlassöffnung und die vierte Auslassöffnung des vierten Leitungskreises (46) in der Nähe der der Brennerseite gegenüberliegenen Auslassseite des Gehäuses (52) angeordnet sind, und wobei sich der vierte Leitungskreis (46) von dort bis zu einem Abstand von dem einen oder den mehreren Brennern (54) erstreckt, so dass das durch den vierten Leitungskreis (46) strömende fünfte Fluid (F5) von der von dem einen oder den mehreren Brennern (54) erzeugten Wärme im Wesentlichen unbeeinflusst bleibt.

9. Heizungssystem (70), aufweisend:
- eine Heizvorrichtung (50) nach Anspruch 7 oder 8;
- wobei der erste Leitungskreis (18) über die erste Einlassöffnung und die erste Auslassöffnung mit einem Warmwasserverbraucher verbunden ist;
- wobei der zweite Leitungskreis (28) über die zweite Einlassöffnung und die zweite Auslassöffnung mit einer Wärmequelle verbunden ist;
**dadurch gekennzeichnet, dass** die an den zweiten Leitungskreis (28) angeschlossene Wärmequelle eine Wärmepumpe (72), insbesondere eine Luftwärmepumpe oder eine Erdwärmepumpe, oder einen Sonnenkollektor (74) darstellt.

10. Heizungssystem nach Anspruch 9, wobei der mit dem ersten Leitungskreis verbundene Warmwasserverbraucher einen Zentralheizungs-Wasserverbraucher oder einen Leitungswasserverbraucher darstellt.

11. Heizungssystem nach einem der Ansprüche 9 oder 10, wobei der Wärmetauscher (1) zur Führung eines vierten Fluids (F4) ferner einen dritten Leitungskreis (38) aufweist, welcher ebenfalls in dem wärmeleitenden Material (2) des Wärmetauschers (1) angeordnet ist;
- wobei der dritte Leitungskreis (38) mit einer dritten Eintrittsöffnung und einer dritten Austrittsöffnung versehen ist, über die er an einen Warmwasserverbraucher angeschlossen ist; und
- wobei die an den ersten Leitungskreis (18) und den zweiten Leitungskreis (28) angeschlossenen Warmwasserverbraucher vorzugsweise einen Zentralheizungs-Wasserverbraucher und einen Leitungswasserverbraucher darstellen.

12. Heizungssystem nach Anspruch 11, wobei der Wärmetauscher (1) zur Führung eines fünften Fluids (F5) ferner einen vierten Leitungskreis (46) aufweist, welcher ebenfalls in dem wärmeleitenden Material (2) des Wärmetauschers (1) angeordnet ist; und
- wobei der vierte Leitungskreis (46) mit einer vierten Einlassöffnung und einer vierten Auslassöffnung versehen ist, über die er an eine Wärmequelle angeschlossen ist.

13. Heizungssystem nach Anspruch 12, wobei die an den vierten Leitungskreis (46) angeschlossene Wärmequelle eine Wärmepumpe (72) oder einen Sonnenkollektor (74) darstellt.

14. Verfahren zum Erwärmen von Wasser eines Wasserverbrauchers unter Verwendung eines Heizungssystems (70) nach einem der Ansprüche 9 bis 13, aufweisend die folgenden Schritte:
- Pumpen eines von einer Wärmequelle erwärmten zweiten Fluids (F2) durch den in dem Bereich des wärmeleitenden Materials (2) angeordneten zweiten Leitungskreis (28); und
- Übertragen von Wärme aus dem zweiten Fluid (F2) über das wärmeleitende Material (2) an einen ersten Leitungskreis (18), der nahe dem zweiten Leitungskreis (28) und in wärmetauschendem Kontakt mit diesem angeordnet ist und an den ein Warmwasserverbraucher angeschlossen ist;
**gekennzeichnet durch** den Schritt des Übertragens von Wärme über das wärmeleitende Material (2) an einen dritten Leitungskreis (38), der gleichermaßen im wärmeleitenden Material (2) nahe dem zweiten Leitungskreis (28) angeordnet ist und an den ein weiterer Warmwasserverbraucher angeschlossen ist.

15. Verfahren nach Anspruch 14, das ferner den Schritt des Erwärmens des wärmeleitenden Materials (2) mit zumindest einem Brenner (54) umfasst, um das durch den ersten Leitungskreis (18) fließende erste Fluid (F1) und/oder das durch den dritten Leitungskreis (38) fließende vierte Fluid (F4) zu erwärmen.

## Revendications

1. Échangeur de chaleur (1) pour un dispositif de chauffage (50), en particulier pour un appareil à eau chaude, comprenant :
- un premier circuit de conduit (18) pour guider un premier fluide (F1) ;
- un deuxième circuit de conduit (28) pour guider un deuxième fluide (F2) ;
- dans lequel le premier circuit de conduit (18) et le deuxième circuit de conduit (28) sont tous les deux agencés dans un matériau thermoconducteur (2) ;
- dans lequel le matériau thermoconducteur (2) est prévu sur un premier côté d'ailettes (10, 12) pour transférer de la chaleur entre un troisième fluide (F3) et au moins le premier circuit de conduit (18) ;
- dans lequel le premier circuit de conduit (18) définit sensiblement un plan agencé sensiblement parallèle au et près du premier côté du matériau thermoconducteur (2) ;
- dans lequel le deuxième circuit de conduit (28) est agencé sensiblement le long du premier circuit de conduit (18) ; et
- dans lequel le deuxième circuit de conduit (28) s'étend sensiblement le long de seulement une partie limitée du plan défini par le premier circuit de conduit (18) ;
**caractérisé par** un troisième circuit de conduit (38) pour guider un quatrième fluide (F4) qui est également agencé dans le matériau thermoconducteur (2) de l'échangeur de chaleur (1) ; et
- dans lequel le troisième circuit de conduit (38) est agencé entre le premier côté du matériau thermoconducteur (2), lequel côté est doté des ailettes (10, 12), et le deuxième circuit de conduit (28).

2. Échangeur de chaleur selon la revendication 1, dans lequel le deuxième circuit de conduit (28) est au moins 20 % plus court que le premier circuit de conduit (18) .

3. Échangeur de chaleur selon la revendication 1 ou 2, comprenant en outre un quatrième circuit de conduit (46) pour guider un cinquième fluide (F5) qui est également agencé dans le matériau thermoconducteur (2) de l'échangeur de chaleur (1) ; et
- dans lequel le troisième circuit de conduit (38) est agencé entre le premier côté du matériau thermoconducteur (2), lequel côté est doté des ailettes (10, 12), et le quatrième circuit de conduit (46).

4. Échangeur de chaleur selon l'une quelconque des revendications précédentes, dans lequel le premier circuit de conduit (18) et le troisième circuit de conduit (38) sont agencés sensiblement dans le même plan et définissent un motif entrelacé.

5. Échangeur de chaleur selon l'une quelconque des revendications précédentes, dans lequel le premier circuit de conduit (18) est agencé entre le deuxième circuit de conduit (28) et le premier côté du matériau thermoconducteur (2), dans lequel ce premier côté est doté des ailettes (10, 12), et dans lequel à l'intérieur du matériau thermoconducteur (2) la longueur du troisième circuit de conduit (38) est sensiblement la même que la longueur du premier circuit de conduit (18).

6. Échangeur de chaleur selon la revendication 5, dans lequel à l'intérieur du matériau thermoconducteur (2) la longueur du troisième circuit de conduit (38) est plus grande que la longueur du deuxième circuit de conduit (28) et/ou la longueur du quatrième circuit de conduit (46), et dans lequel cette longueur du deuxième (28) et/ou du quatrième circuit de conduit (46) diffère d'au moins 10 % de la longueur du premier circuit de conduit (18).

7. Dispositif de chauffage (50), comprenant :
- un boîtier (52) avec un échangeur de chaleur (1) selon l'une quelconque des revendications précédentes ;
- une première source de chaleur agencée dans le boîtier (52) et comprenant au moins un brûleur (54), dans lequel le brûleur (54) est agencé près du premier côté du matériau thermoconducteur (2) doté des ailettes (10, 12) et dans lequel les gaz de combustion de l'au moins un brûleur (54) forment le troisième fluide (F3), qui s'écoule durant l'utilisation à partir du côté brûleur via les ailettes (10, 12) et le long du premier côté du matériau thermoconducteur (2) vers un côté évacuation du boîtier (52), et un transfert de chaleur peut avoir lieu ici entre le troisième fluide (F3) et le matériau thermoconducteur (2) ;
- dans lequel le premier circuit de conduit (18) agencé dans le matériau thermoconducteur (2) pour guider le premier fluide (F1) est doté d'une première ouverture d'entrée et d'une première ouverture de sortie ; et
- dans lequel le deuxième circuit de conduit (28) agencé dans le matériau thermoconducteur (2) pour guider le deuxième fluide (F2) est doté d'une deuxième ouverture d'entrée et d'une deuxième ouverture de sortie.

8. Dispositif de chauffage selon la revendication 7,
- dans lequel la deuxième ouverture d'entrée et la deuxième ouverture de sortie du deuxième circuit de conduit (28) sont agencées près du côté évacuation du boîtier (52) situé à l'opposé du côté brûleur, et dans lequel le deuxième circuit de conduit (28) s'étend à partir de là sur une distance par rapport aux un ou plusieurs brûleurs (54) de telle sorte que le deuxième milieu (F2) s'écoulant à travers le deuxième circuit de conduit (28) demeure sensiblement non touché par la chaleur générée par les un ou plusieurs brûleurs (54) ; et
- de préférence comprenant en outre un quatrième circuit de conduit (46) agencé dans le matériau thermoconducteur (2) pour guider un cinquième fluide (F5) qui est doté d'une quatrième ouverture d'entrée et d'une quatrième ouverture de sortie ; et
- dans lequel de manière davantage préférée la quatrième ouverture d'entrée et la quatrième ouverture de sortie du quatrième circuit de conduit (46) sont agencées près du côté évacuation du boîtier (52) situé à l'opposé du côté brûleur, et dans lequel le quatrième circuit de conduit (46) s'étend à partir de là sur une distance par rapport aux un ou plusieurs brûleurs (54) de telle sorte que le cinquième milieu (F5) s'écoulant à travers le quatrième circuit de conduit (46) demeure sensiblement non touché par la chaleur générée par les un ou plusieurs brûleurs (54).

9. Système de chauffage (70), comprenant :
- un dispositif de chauffage (50) selon la revendication 7 ou 8 ;
- dans lequel le premier circuit de conduit (18) est relié via la première ouverture d'entrée et la première ouverture de sortie à un consommateur d'eau chaude ;
- dans lequel le deuxième circuit de conduit (28) est relié via la deuxième ouverture d'entrée et la deuxième ouverture de sortie à une source de chaleur ;
**caractérisé en ce que** la source de chaleur reliée au deuxième circuit de conduit (28) comprend une pompe à chaleur (72), en particulier une pompe à chaleur à air ou une pompe à chaleur géothermique, ou un capteur solaire (74).

10. Système de chauffage selon la revendication 9, dans lequel le consommateur d'eau chaude relié au premier circuit de conduit est un consommateur d'eau de chauffage central, CH, ou un consommateur d'eau du robinet.

11. Système de chauffage selon l'une quelconque des revendications 9 ou 10, dans lequel l'échangeur de chaleur (1) comprend en outre un troisième circuit de conduit (38) pour guider un quatrième fluide (F4) qui est également agencé dans le matériau thermoconducteur (2) de l'échangeur de chaleur (1) ;
- dans lequel le troisième circuit de conduit (38) est doté d'une troisième ouverture d'entrée et d'une troisième ouverture de sortie avec lesquelles il est relié à un consommateur d'eau chaude ; et
- dans lequel les consommateurs d'eau chaude reliés au premier circuit de conduit (18) et au deuxième circuit de conduit (28) comprennent de préférence un consommateur d'eau de chauffage central, CH, et un consommateur d'eau du robinet.

12. Système de chauffage selon la revendication 11, dans lequel l'échangeur de chaleur (1) comprend en outre un quatrième circuit de conduit (46) pour guider un cinquième fluide (F5) qui est également agencé dans le matériau thermoconducteur (2) de l'échangeur de chaleur (1) ; et
- dans lequel le quatrième circuit de conduit (46) est doté d'une quatrième ouverture d'entrée et d'une quatrième ouverture de sortie avec lesquelles il est relié à une source de chaleur.

13. Système de chauffage selon la revendication 12, dans lequel la source de chaleur reliée au quatrième circuit de conduit (46) comprend une pompe à chaleur (72) ou un capteur solaire (74).

14. Procédé de chauffage d'eau d'un consommateur d'eau à l'aide d'un système de chauffage (70) selon l'une quelconque des revendications 9 à 13, comprenant les étapes consistant à :
- pomper un deuxième fluide (F2) chauffé par une source de chaleur à travers le deuxième circuit de conduit (28) agencé dans la pièce de matériau thermoconducteur (2) ; et
- transférer de la chaleur via le matériau thermoconducteur (2) à partir du deuxième fluide (F2) à un premier circuit de conduit (18) qui est agencé près du deuxième circuit de conduit (28) et en contact d'échange de chaleur avec celui-ci et qui est relié à un consommateur d'eau chaude ;
**caractérisé par** l'étape consistant à transférer de la chaleur via le matériau thermoconducteur (2) à un troisième circuit de conduit (38) qui est agencé de même dans le matériau thermoconducteur (2) près du deuxième circuit de conduit (28) et auquel un autre consommateur d'eau chaude est relié.

15. Procédé selon la revendication 14, comprenant en outre l'étape consistant à chauffer le matériau thermoconducteur (2) avec au moins un brûleur (54) afin de chauffer le premier fluide (F1) s'écoulant à travers le premier circuit de conduit (18) et/ou le quatrième fluide (F4) s'écoulant à travers le troisième circuit de conduit (38).
